# EUROPEAN PATENT SPECIFICATION

(11) **EP 1 866 134 B1**
(45) Date of publication and mention of the grant of the patent: **20.07.2011**
(21) Application number: 06725855.8
(22) Date of filing: 22.03.2006
(51) Int. Cl.: B27L 1/10

(54) **WOOD HARVESTING METHOD AND APPARATUS**
HOLZERNTEVERFAHREN UND -VORRICHTUNG
PROCEDE ET APPAREIL DE COUPE DE BOIS

(30) Priority: 22.03.2005 FI 20050306
(43) Date of publication of application: 19.12.2007
(73) Proprietor: Ponsse Oyj, 74200 Vieremä (FI)
(72) Inventor: LASTUNEN, Turkka, FI-20900 Turku (FI)
(74) Representative: Pirhonen, Kari Lennart
(86) International application number: PCT/FI2006/000094
(87) International publication number: WO 2006/100340

(56) References cited:
- FI-A- 33 798
- FI-B- 83 606
- SU-A1- 1 165 574
- SU-A1- 1 444 150
- US-A- 3 263 720
- US-A- 3 587 685
- US-A- 5 022 446

## Description

The present invention relates to a method of harvesting wood in accordance with the preamble of claim 1 and an happaratus in accordance with the preamble of claim 3 (see F183606B).

The present invention relates first of all to a method of harvesting wood by using a harvester head of a harvester moving on terrain, in which method the trees are being processed in steps by using the harvester head, according to which method
- the trunk of the tree to be felled is gripped by the gripping means of the harvester head,
- the trunk of the tree is being cut by using a cutting device of the harvester head,
- the cut tree trunk is caused to move through the harvester head by using at least one feeding roller, which is brought into contact with the tree trunk,
- the cut tree trunk is being delimbed by using at least one delimbing device of the harvester head,
- the delimbed tree trunk is being cut into logs of suitable length by using a cutting device of the harvester head.

### PRIOR ART

In mechanized wood harvesting, felling or harvesting heads mounted on various carrying machines are commonly used. In the operation of a harvester head, the trunk of the tree to be felled is gripped by means of the harvester head at a point close to the ground surface, whereupon a cutting device, in most cases a chain saw, provided in the harvester head cuts the tree. A harvester head can also be used to process trees already felled. The felled trunk is fed through the harvester head while the various knives or equivalent elements delimb and/or debark the trunk, and the cutting device cuts it into logs of suitable length. The harvester head is connected to a carrier machine, such as e.g. a forestry machine or excavator, from which it receives its operating power via power transmission means. The control of the functions of the harvester head and the registering of measurement data can n be arranged in many different ways, normally by using a computer-based measuring and control system designed for the harvester head.

The delimbing and debarking of a tree trunk can also be carried out in conjunction with wood harvesting performed using a harvester head. The trunk is dellmbed e.g. by means of knives connected to the apparatus, and the debarking can also be performed using various debarking devices, e.g. debarking knives or rollers connected to the harvester head. It has also been established that replacing the straight spike rows or straight ribs of the feed rollers of the harvester head with oblique spike rows or oblique ribs results in setting the tree trunk into a rotating motion, which simultaneously causes or promotes debarking of the tree trunk to some degree.

There are also special debarking machines and other wood processing machines, including e.g. the so-called bed processor, twin grip harvester and boom delimber. These machines also have feed rollers, which may also be used for removing bark from the tree trunk.

However, the debarking of a tree trunk using the above-mentioned debarking machines or harvester head can generally not be performed very successfully because the wood species and wood harvesting conditions vary greatly. It must therefore be stated that the many different conditions can not be taken into account in prior-art wood harvesting or debarking. However, the technology of the invention can be applied to enhance debarking even in other cases besides harvester grapples supported at the end of a movable boom system. For example, a so-called twin grip harvester can be advantageously equipped to implement the inventive idea.

### OBJECT OF THE INVENTION

The object of the present invention is to create a new method for debarking a tree trunk, a method that does not have the drawbacks described above.

### FEATURES OF METHOD OF THE INVENTION

The method of the invention is characterized in that according to the method
- the tree trunk is caused to move straight through the harvester head when it is not necessary to debark the tree trunk by adjusting the feed roller feeding the tree trunk to be oriented in the direction of the longitudinal axis of the tree trunk, or
- the tree trunk is caused to rotate when moving through the harvester head for debarking of the tree trunk by adjusting the feed roller to form an angle with the longitudinal axis of the tree trunk.

By adjusting the position of the feed and debarking roller or drum, it has been established in practice that a tree trunk can be debarked by the disclosed method more effectively than by prior-art methods.

### EMBODIMENTS OF THE METHOD OF THE INVENTION

A preferred embodiment of the method of the invention is characterized in that
- in the harvester head of the wood harvesting machine, at least one debarking roller or drum, which also serves as a feed roller moving the tree trunk or as an idling support roller, is pressed against the tree trunk,
- and the position of the debarking roller or drum is adjusted so that the rotation axis of the debarking roller forms an angle of desired magnitude relative to the longitudinal axis of the tree trunk.

A second preferred embodiment of the method of the invention is characterized in that the position of the debarking roller or drum pressed against the tree trunk in the harvester head of the wood harvesting machine, i.e. the angle between the rotation axis of the debarking roller and the longitudinal axis of the tree trunk is adjusted during the debarking of the tree trunk by taking into account changing debarking conditions, such as the wood species and/or the prevailing environmental conditions.

A third preferred embodiment of the method of the invention is characterized in that the position of the debarking roller pressed against the tree trunk in the harvester head of the wood harvesting machine, i.e. the angle between the rotation axis of the debarking roller and the longitudinal axis of the tree trunk is adjusted and locked so as to make it suited for debarking before the debarking of the tree trunk is started. The selected angle may be based e.g. on experience or on tests made on a given wood species to be processed.

A fourth preferred embodiment of the method of the invention is characterized in that, when necessary, the position of the debarking roller pressed against the tree trunk in the harvester head of the wood harvesting machine, i.e. the angle between the rotation axis of the debarking roller and the longitudinal axis of the tree trunk is adjusted continuously during the debarking to a value suited for the debarking process. This allows advantageous changing of the ratio of the motion of the tree trunk in the direction of its longitudinal axis (translational motion) to the rotational motion of the tree trunk. Preferably in a case where the bark sticks more firmly to the surface of the tree trunk, it is possible e.g. to change the aforesaid angle so that the speed of longitudinal motion of the tree trunk is substantially slowed down, whereas the rotational speed is simultaneously increased. This results in more contacts of the feed and debarking devices with the surface of the tree trunk and presumably in more efficient debarking.

A fifth preferred embodiment of the method of the invention is characterized in that, in the harvester head of the wood harvesting machine, the angle between the rotation axis of the debarking roller or drum and the longitudinal axis of the tree trunk is adjusted to the range of 90° - 45°, in other words, the debarking roller is oriented in the direction of the longitudinal axis of the tree trunk or it forms an angle of 0 - 45° with the longitudinal axis of the tree trunk. A good debarking result is achieved already with very small angles. The angle between the rotation axis of the debarking roller or drum and the longitudinal axis of the tree trunk is e.g. about 85°.

Via the adjustment of the angle, it is possible to choose whether the cut tree trunk is to go straight through or whether it is also to be rotating. A particularly efficient action is achieved if the debarking roller simultaneously functions as a feed roller feeding the tree trunk. In this case, it is possible to control when necessary, even continuously during wood harvesting, whether an individual tree trunk is to be debarked or not.

A sixth preferred embodiment of the method of the invention is characterized in that
- in the harvester head of the wood harvesting machine, ribs or grooves are formed in the surface of the debarking roller or drum, which ribs or grooves are parallel to the rotation axis of the debarking roller or they form an angle with the rotation axis,
- and that the angle of the ribs on the surface of the feed roller relative to the rotation axis of the feed roller and the angle of the rotation axis of the feed roller relative to the longitudinal axis of the tree trunk are selected according to the debarking conditions.

The degree of debarking can be considerably adjusted by varying the angle of the ribs on the debarking roller relative to the direction of motion of the tree trunk.

### THE APPARATUS OF THE INVENTION

The invention also concerns an apparatus for wood harvesting moving on terrain and provided with a harvester head for processing the trees to be felled, which harvester head comprises
- gripping means for gripping the trunk of the tree to be felled,
- a cutting device for cutting the trunk of the tree to be felled,
- at least one feeding roller for bringing it into contact with the cut tree trunk and for moving the cut tree trunk through the harvester head,
- at least one delimbing device for delimbing the cut tree trunk, and
- a cutting device for cutting the delimbed tree trunk into logs of suitable length.

### FEATURES OF THE APPARATUS OF THE INVENTION

The wood harvesting apparatus of the invention is characterized in
- that the harvester head is provided with an adjusting element for adjusting the feeding roller feeding the cut tree trunk through the harvester head into
- first position where the feed roller is the oriented in the direction of the longitudinal axis of the tree trunk when the tree trunk it is not to be debarked, or
- second position where the feed roller is forming an angle with the longitudinal axis of the tree trunk when the tree trunk is to be barked.

### EMBODIMENTS OF THE APPARATUS OF THE INTENTION

A preferred embodiment of the wood harvesting apparatus of is characterized in
- that the debarking roller or drum in the harvester head of the wood harvesting apparatus is a feed roller moving the tree trunk or an idling support roller,
- and that the position of the debarking roller or drum can be adjusted by means of an adjusting element so that the rotation axis of the roller forms an angle of desired magnitude relative to the longitudinal axis of the tree trunk.

An advantageous feature of the wood harvesting apparatus of the invention is that the same roller can act both as a debarking roller and as a feed roller feeding the tree trunk.

In the harvester head of the wood harvesting apparatus according to prior art, the adjusting element for adjusting the debarking roller or drum is a presettable adjusting element, such as an adjusting screw, by means of which the position of the debarking roller to be pressed against the tree trunk, i.e. the angle between the rotation axis of the debarking roller and the longitudinal axis of the tree trunk can be adjusted and locked so as to make it suited for the debarking process before the debarking of the tree trunk is started. According to the invention the roller can be made continuously adjustable.

A second preferred embodiment of the wood harvesting apparatus of the invention is characterized in that, In the harvester head of the wood harvesting apparatus, the adjusting element for adjusting the debarking roller or drum is a continuous adjusting element, such as a hydraulic cylinder, by means of which the position of the debarking roller to be pressed against the tree trunk, i.e. the angle between the rotation axis of the debarking roller and the longitudinal axis of the tree trunk can be adjusted continuously during the debarking process so as to make it suited for the debarking process.

A third preferred embodiment of the wood harvesting apparatus of the invention is characterized in that, in the harvester head of the wood harvesting apparatus, the adjusting element for adjusting the debarking roller or drum can be so adjusted that the angle between the rotation axis of the debarking roller and the longitudinal axis of the tree trunk is in the range of 0° - 45 °, in other words, the direction of motion of the rim of the debarking roller is parallel to the longitudinal axis of the tree trunk or it forms an angle with the longitudinal axis of the tree trunk.

By adjusting the angle, a selection is made as to whether the cut tree trunk shall go straight through or whether it shall rotate- As the debarking roller is simultaneously a feed roller feeding the tree trunk, the same working machine moving on terrain and the same harvester head can be used for many different tasks. During wood harvesting, it is possible e.g. to choose whether the tree trunk is to be debarked or not.

A fourth preferred embodiment of the wood harvesting apparatus of the invention is characterized in
- that, in the harvester head of the wood harvesting apparatus, the surface of the debarking roller or drum Is provided with ribs or grooves, which extend in the direction of the rotation axis of the debarking roller or which form an angle with the direction of rotation,
- and that, using the adjusting element for adjusting the debarking roller or drum, it is possible to adjust the angle of the ribs or grooves relative to the direction of rotation of the feed roller as well as the angle of the rotation axis of the feed roller relative to the longitudinal axis of the tree trunk.

### EMBODIMENTS EXAMPLES

In the following, the invention will be described in detail with reference to examples and the attached drawings, wherein

### LIST OF FIGURES

- Fig. 1: presents a diagrammatic side view of a harvester head and a tree trunk in conjunction with it.
- Fig. 2: presents a diagrammatic view of the harvester head and tree trunk of Fig. 1 as seen from the other side.
- Fig. 3: presents diagrammatic side view of a tree trunk and a prior-art feed roller of a harvester head.
- Fig. 4: corresponds to Fig. 3 and presents a tree trunk and a feed roller for a wood harvesting apparatus according to the invention.
- Fig. 5: presents a diagrammatic side view of the harvester head of a wood harvesting apparatus according to the invention and a tree trunk in conjunction with it.
- Fig. 6: corresponds to Fig. 5 and presents a harvester head for a wood harvesting apparatus according to a second embodiment of the invention.
- Fig. 7: corresponds to Fig. 5 and presents a harvester head for a wood harvesting apparatus according to a third embodiment of the invention.
- Fig. 8: presents a harvester head, where according to prior art the feed roller has been adjusted beforehand.
- Fig. 9: also presents a harvester head, where according to prior art the feed roller has been adjusted beforehand.
- Fig. 10: presents a diagrammatic side view of a harvester according to the invention.
- Fig. 11: presents a diagrammatic side view of an excavator provided with a harvester head according to the invention.
- Fig. 12: presents a diagrammatic side view of processing machine provided with a felling grapple.

### DESCRIPTION OF THE FIGURES

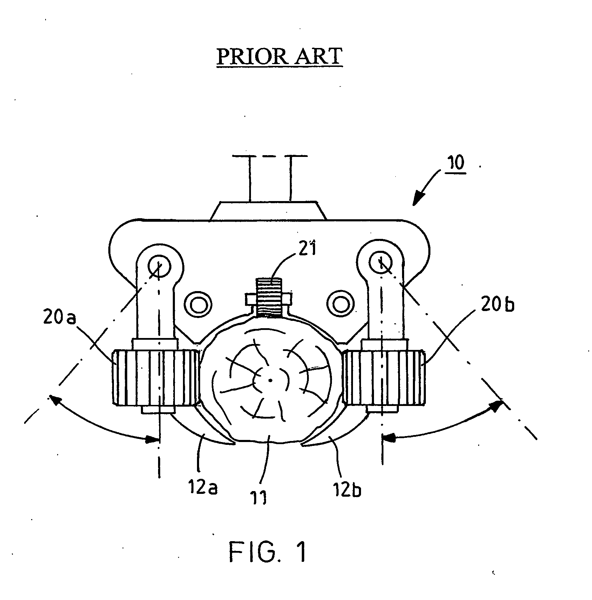

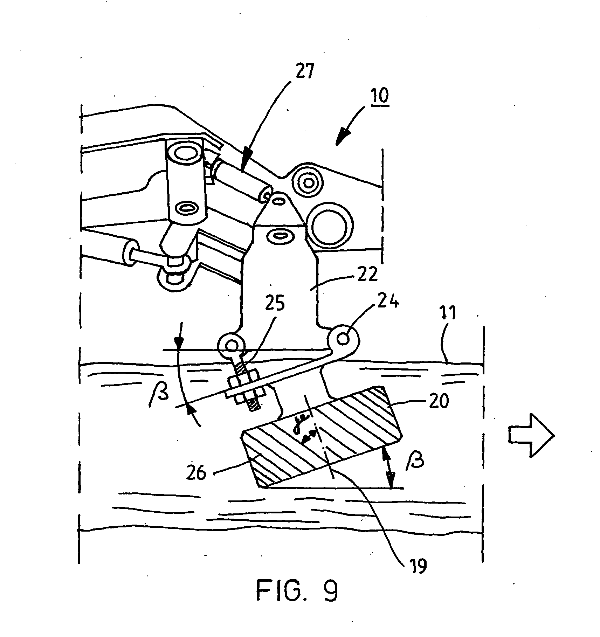

Fig. 1 presents a diagrammatic side view of a prior-art harvester head 10 and a tree trunk 11 in conjunction with it. In the harvester head 10, the tree trunk 11 is supported by an idling support roller 21 and feed rollers 20a and 20b driven e.g. by hydraulic motors. In addition, the harvester head 10 is provided with delimbing knives 12a and 12b for delimbing the tree trunk 11.

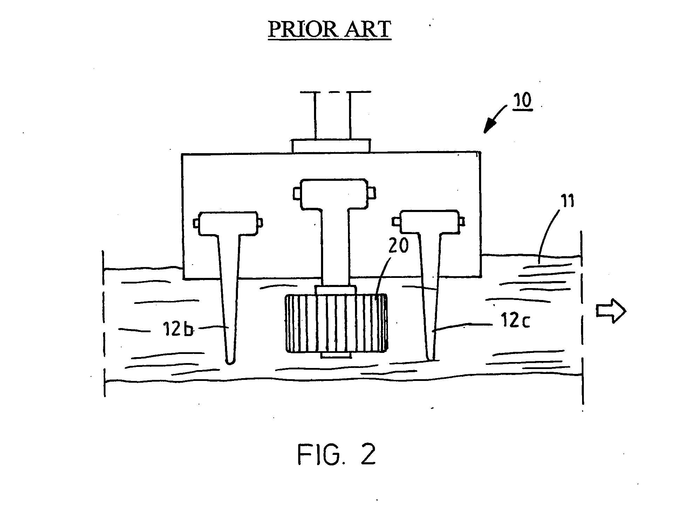

Fig. 2 shows a diagrammatic view of the harvester head 10 and tree trunk 11 of Fig. 1 as seen from another side. The feed rollers 20 of the harvester head 10 move the tree trunk 11 to the right in Fig. 2, while the delimbing knives 12b and 12c cut the branches off the tree trunk 11.

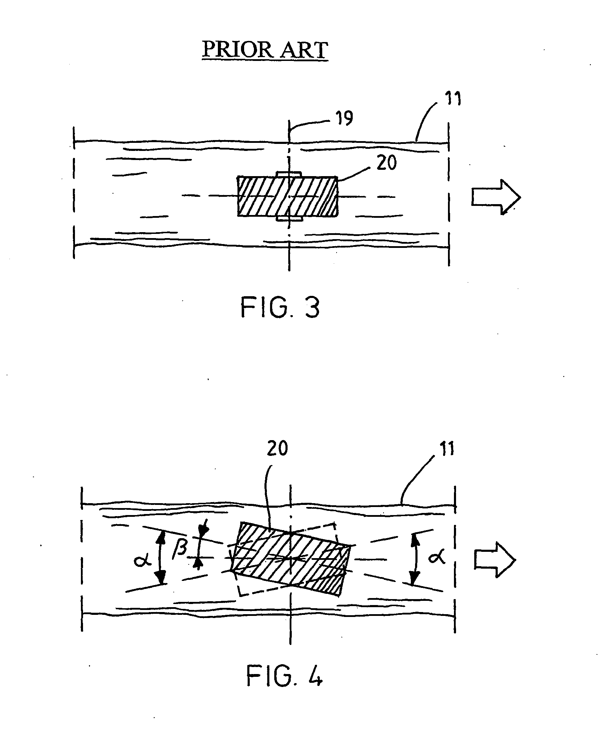

Fig. 3 presents a diagrammatic side view of a tree trunk 11 and a prior-art feed roller 20 of a harvester head, which moves the tree trunk 11 to the right in Fig. 3. The rotation axis of the feed roller 20 is mainly parallel to the longitudinal axis of the tree trunk 11 and the direction of motion of the tree trunk 11, in other words, the axis of the feed roller 20 and the longitudinal axis of the tree trunk 11 are mainly perpendicular to each other.
Fig. 4 presents a situation corresponding to Fig. 3 in the harvester head of a wood harvesting apparatus provided with an adjustable debarking device according to the invention, in which the feed roller 20 has been turned to an angle ß relative to the longitudinal axis of the tree trunk 11. The feed roller 20 can also be turned in the opposite direction so that the total adjustment range of the feed roller 20 corresponds to angle α as shown in Fig. 4.

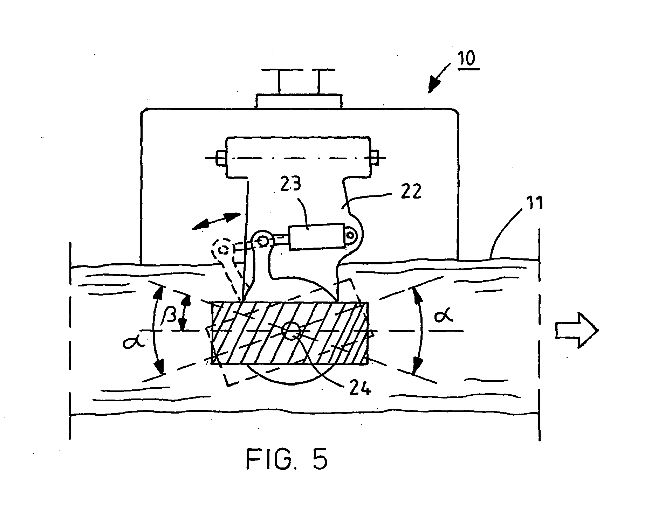

Fig. 5 presents a diagrammatic side view of a harvester head 10 according to the invention for a wood harvesting apparatus, and a tree trunk 11. For better visual effect, Fig. 5 has been simplified so that it only shows one feed roller 20 of the harvester head 10, said roller moving the tree trunk 11 to the right in Fig. 5. The feed roller 20 is rotated e.g. by a hydraulic motor, which is not shown in the figure. In practice, the harvester head may have a plurality of both feed rollers moving the tree trunk and passive support rollers.
   According to the invention, the feed roller 20 presented in Fig. 5 is turned to an angle ß relative to the longitudinal axis of the tree trunk 11. The total adjustment range for turning the feed roller 20 is equal to angle α. In Fig. 5, the feed roller 20 is connected to the harvester head 10 by an arm part 22 turnable according to the thickness of the tree trunk. In the embodiment in Fig. 5, the adjusting device used to control the turning of the feed roller 20 Is a hydraulic cylinder 23, which turns the feed roller 20 about the fulcrum 24 to a desired angle relative to the longitudinal axis of the tree trunk 11 according to the debarking conditions. However, the adjusting device controlling the turning of the feed roller 20 may also be e.g. a pneumatic or mechanical device.

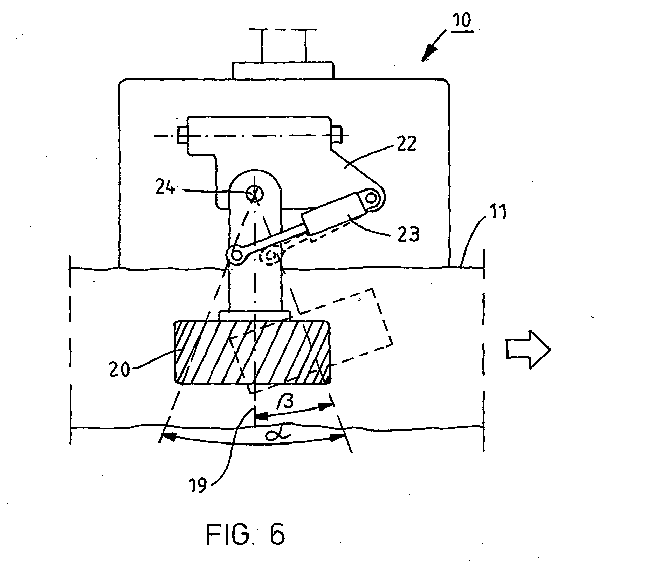

Fig. 6 presents a tree trunk 11 and a second embodiment of the harvester head 10 for a wood harvesting apparatus according to the invention, wherein the fulcrum 24 of the feed roller 20 is located at a larger distance from the feed roller 20. In this case, the path of motion of the feed roller 20 in an adjusting situation is somewhat different. In other respects, the embodiment presented in Fig. 6 corresponds to the embodiment presented in Fig. 5. The largest possible lateral turning angle of the feed roller 20 is ß, and the total adjustment range of the feed roller 20 is angle α.

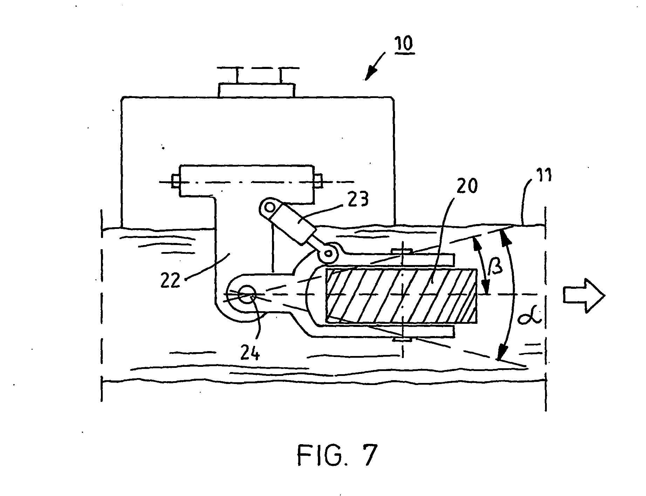

Fig. 7 presents a third embodiment of the harvester head 10 for a wood harvesting apparatus of the invention, wherein the fulcrum 24 of the feed roller is again located in a different place as compared to the embodiments presented in Figs. 5 and 6. In this case, too, the lateral turning angle of the feed roller 20 is ß and the total adjustment range is angle α.

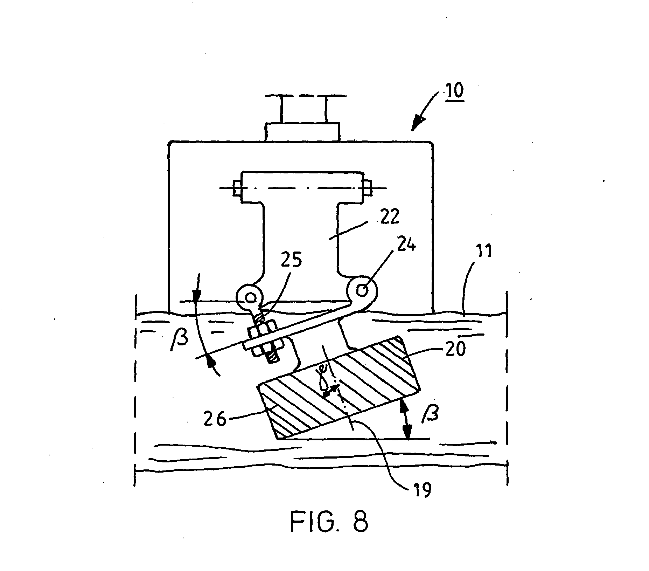

Fig. 8 presents a harvester head, where according to prior art the feed roller 20 of the harvester head 10 has been adjusted beforehand by means of an adjusting bolt 25 and the fulcrum 24 to a desired angle ß relative to the longitudinal axis of the tree trunk 11. Thus, the adjustment according to this solution remains fixed and constant while the tree trunk 11 is being fed through. However, if there is a change in the conditions, such as e.g. the wood species etc., then the angle ß can be adjusted to a desired magnitude by changing the length of the adjusting bolt 25.
In Fig. 8, the ribs 26 on the surface of the feed roller 20 are in an oblique position such that they form an angle γ with the direction of the rotation axis of the feed roller. This enhances the shear force detaching the bark from the wood part. The magnitude of the angle γ of the ribs 26 on the feed roller 20 used in the debarking can be selected as desired according to the debarking conditions. The ribs 26 on the feed roller 20 may also be inclined in the other direction.
   In the harvester head 10 in Fig. 9, the feed roller 20 is supported on the frame of the harvester head by a toggle lever mechanism 27 to optimize the geometry of the path of motion of the feed roller 20. By the action of this mechanism, the feed roller 20 is always caused to be pressed against the tree trunk in the right position regardless of the thickness of the tree trunk. In the example in Fig. 9, the angle ß of the feed roller 20 relative to the longitudinal axis of the tree trunk 11 has been adjusted according to prior art to a suitable magnitude before starting the debarking. However, continuous adjustment of the feed roller 20 can also be implemented according to the invention e.g. in accordance with the solutions presented in Figs. 5-7.

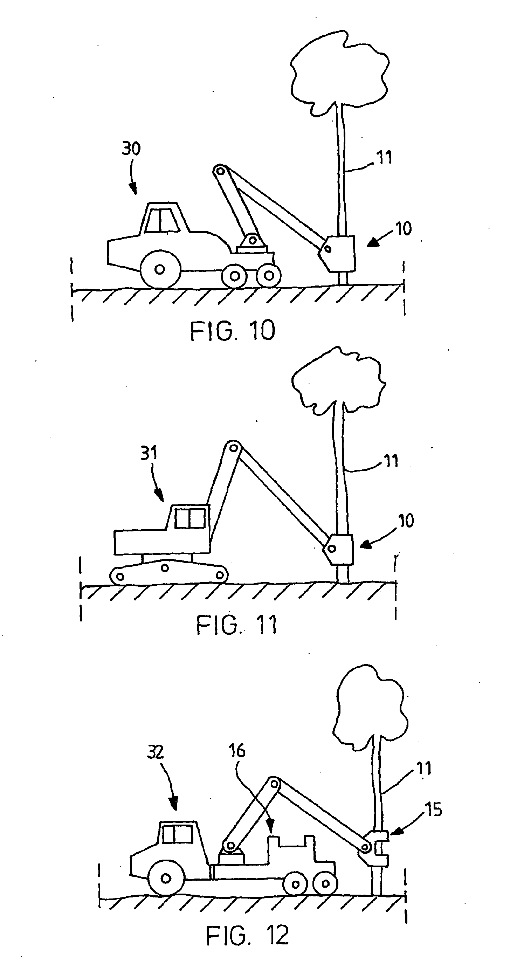

Figs. 10, 11 and 12 present forestry machines used in wood harvesting. Fig. 11 shows a harvester 30 and Fig. 12 an excavator 31, each being provided with a multi-purpose harvester head 10, whereas Fig. 12 shows a processing machine 32 provided with a felling grapple 15, by means of which the felled trees are moved to a processing device 16 on the frame of the machine, to be processed by it. According to the invention, an adjustable debarking roller can be used in all the above-mentioned forestry machines.

### ADDITIONAL REMARKS

It is obvious to a person skilled in the art that different embodiments of the invention may be varied within the scope of the claims presented below. For example, crawler-type purpose-built forestry machines somewhat resembling a crawler excavator are known. The frame of the wood harvesting apparatus may be provided with wheels or caterpillar chains. In all devices, the number of adjustable rollers or drums, the quality of their surface, the height of the grooves and the inclination and/or direction of the ribs and/or spike rows may vary. For example, the harvester head of the wood harvesting apparatus may be provided with only one adjustable roller. However, it is also possible to place rollers or drums on opposite sides of the tree trunk, so that they move around the tree trunk in the same direction or in opposite directions.

### LIST OF REFERENCE NUMBERS

- 10: Harvester head
- 11: Tree trunk
- 12: Knife
- 15: Felling grapple
- 16: Processing device
- 19: Rotation axis of roller
- 20: Feed roller
- 21: Support roller
- 22: Mounting arm
- 23: Cylinder
- 24: Fulcrum
- 25: Bolt
- 26: Rib
- 27: Toggle lever mechanism
- 30: Harvester
- 31: Excavator provided with a harvester head
- 32: Processing machine

## Claims

1. A method of harvesting wood by using a harvester head (10) of a harvester (30, 31) moving on terrain, in which method the trees are being processed in steps by using the harvester head, according to which method
- the trunk (11) of the tree to be felled is gripped by the gripping means of the harvester head (10),
- the trunk (11) of the tree is being cut by using a cutting device of the harvester head (10),
- the cut tree trunk (11) is caused to move through the harvester head (10) by using at least one feeding roller (20), which is brought into contact with the tree trunk,
- the cut tree trunk (11) is being delimbed by using at least one delimbing device (12) of the harvester head (10),
- the delimbed tree trunk (11) is being cut into logs of suitable length by using a cutting device of the harvester head (10),
**characterized in that** according to the method
- the tree trunk (11) is caused to move straight through the harvester head (10) when it is not necessary to debark the tree trunk by adjusting the feed roller (20) feeding the tree trunk to be oriented in the direction of the longitudinal axis of the tree trunk, or
- the tree trunk (11) is caused to rotate when moving through the harvester head (10) for debarking of the tree trunk by adjusting the feed roller (20) to form an angle (ß) with the longitudinal axis of the tree trunk.

2. A method according to claim 1, **characterized in that**, the feed roller (20) is adjusted to form an angle (ß) of 0°-45° with the longitudinal axis of the tree trunk (11) for the selection whether the cut tree trunk shall go straight through or whether it shall rotate.

3. An apparatus (30, 31) for wood harvesting moving on terrain and provided with a harvester head (10) for processing the trees to be felled, which harvester head comprises
- gripping means for gripping the trunk (11) of the tree to be felled,
- a cutting device for cutting the trunk (11) of the tree to be felled,
- at least one feeding roller (20) for bringing it into contact with the cut tree trunk (11) and for moving the cut tree trunk through the harvester head (10),
- at least one delimbing device (12) for delimbing the cut tree trunk (11), and
- a cutting device for cutting the delimbed tree trunk (11) into logs of suitable length, **characterized in**
- **that** the harvester head (10) is provided with an adjusting element for adjusting the feeding roller (20) feeding the cut tree trunk (11) through the harvester head (10) into
- first position where the feed roller (20) is the oriented in the direction of the longitudinal axis of the tree trunk when the tree trunk it is not to be debarked, or
- second position where the feed roller (20) is forming an angle (ß) with the longitudinal axis of the tree trunk when the tree trunk (11) is to be barked.

4. Apparatus according to claim 3, **characterized in that** the adjusting element is provided to adjust the feed roller (20) into an angle (ß) of 0°-45° with the longitudinal axis of the tree trunk (11) for the selection whether the cut tree trunk shall go straight through or whether it shall rotate.

## Patentansprüche

1. Verfahren zur Holzernte mit Hilfe des eines Harvesteraggregats (10) eines sich im Gelände bewegenden Harvesters (30, 31), wobei die Bäume mit Hilfe des Harvesteraggregats schrittweise bearbeitet werden, wonach
- der Stamm (11) des zu fällenden Baums mit Hilfe der Greifvorrichtung des Harvesteraggregats (10) ergriffen wird,
- der Stamm (11) des abzuschneidenden Baums mit Hilfe einer Sägevorrichtung des Harvesteraggregats (10) abgeschnitten wird,
- der abgeschnittene Baumstamm (11) mit Hilfe mindestens einer mit dem Stamm in Kontakt gebrachten Vorschubwalze (20) durch das Harvesteraggregat (10) bewegt wird,
- der abgeschnittene Baumstamm (11) mit Hilfe mindestens einer Entastungsvorrichtung (12) des Harvesteraggregats (10) entastet wird,
- der entastete Baumstamm (11) mit Hilfe einer Sägevorrichtung des Harvesteraggregats (10) auf das gewünschte Rundholzmaß abgelängt wird,
**dadurch gekennzeichnet , dass** nach diesem Verfahren
- der Baumstamm (11) gerade durch das Harvesteraggregat (10) bewegt wird, wenn der Baumstamm nicht entrindet zu werden braucht, indem die Vorschubwalze (20), die den Baumstamm bewegt, parallel zur Längsachse des Baumstamms ausgerichtet wird, oder
- der Baumstamm (11), während dieser zwecks Entrindung durch das Harvesteraggregat (10) bewegt wird, **dadurch** rotiert wird, dass die Vorschubwalze (20) so ausgerichtet wird, dass sie mit der Längsachse des Baumstamms einen Winkel (ß) bildet.

2. Verfahren nach Anspruch 1, **dadurch gekennzeichnet , dass** die Vorschubwalze (20), je nachdem, ob der Baumstamm gerade durch das Harvesteraggregat (10) bewegt oder rotiert werden soll, so geregelt wird, dass sie mit der Längsachse des Baumstamms (11) einen Winkel (ß) von 0°-45° bildet.

3. Vorrichtung (30, 31) für Holzernte, die sich im Gelände bewegt und mit einem Harvesteraggregat (10) zur Bearbeitung der zu fällenden Bäume ausgestattet ist, welches Harvesteraggregat besteht aus
- einer Greifvorrichtung zum Greifen des Stamms (11) des zu fällenden Baums,
- einer Sägevorrichtung zum Abschneiden des Stamms (11) des zu fällenden Baums,
- mindestens einer Vorschubwalze (20), um diese mit dem abgeschnittenen Stamm (11) in Kontakt zu bringen und um den abgeschnittenen Stamm durch das Harvesteraggregat (10) zu bewegen,
- mindestens einer Entastungsvorrichtung (12) zum Entasten des abgeschnittenen Baumstamms (11) und
- einer Sägevorrichtung zum Ablängen des entasteten Baumstamms (11) auf die gewünschte Rundholzlänge,
**dadurch gekennzeichnet, dass**
- das Harvesteraggregat (10) mit einem Regulierungselement zur Regulierung der Vorschubwalze (20) ausgestattet ist, welche den abgeschnittenen Baumstamm (11) durch das Harvesteraggregat (10) bewegt entweder
- in Position 1, in der die Vorschubwalze (20) parallel zur Längsachse des Baumstamms verläuft, wenn der Baumstamm (11) nicht entrindet werden soll, oder
- in Position 2, in der die Vorschubwalze (20) mit der Längsachse des Baumstamms einen Winkel (ß) bildet, wenn der Baumstamm (11) entrindet werden soll.

4. Verfahren nach Anspruch 3, **dadurch gekennzeichnet, dass** ein Regulierungselement vorhanden ist, mit dem die Vorschubwalze (20), je nachdem, ob der Baumstamm gerade durch das Harvesteraggregat (10) bewegt oder rotiert werden soll, in einen Winkel (ß) von 0°-45° zur Längsachse des Baumstamms (11) gebracht wird.

## Revendications

1. Méthode de récolte du bois faisant appel à une tête d'abattage (10) d'une abatteuse (30, 31) se déplaçant sur le terrain, dans laquelle méthode les arbres sont traités en étapes en utilisant la tête d'abattage, méthode selon laquelle
- le tronc (11) de l'arbre à abattre est saisi par les moyens de préhension de la tête d'abattage (10),
- le tronc (11) de l'arbre est coupé en utilisant un dispositif de coupe de la tête d'abattage (10),
- le tronc (11) d'arbre coupé est déplacé directement à travers la tête d'abattage (10) en utilisant au moins un rouleau d'alimentation (20), amené en contact avec le tronc d'arbre,
- le tronc (11) d'arbre coupé est ébranché en utilisant au moins un dispositif d'ébranchage (12) de la tête d'abattage,
- le tronc (11) d'arbre ébranché est coupé en billes de longueur appropriée en utilisant un dispositif de coupe de la tête d'abattage (10),
**caractérisée en ce que**, selon la méthode,
- le tronc (11) d'arbre est déplacé directement à travers la tête d'abattage (10), lorsqu'il n'est pas nécessaire d'écorcer le tronc d'arbre, en réglant le rouleau d'alimentation (20) alimentant le tronc d'arbre de façon à l'orienter dans la direction de l'axe longitudinal du tronc d'arbre, ou
- le tronc (11) d'arbre est mis en rotation lorsqu'il se déplace à travers la tête d'abattage (10) pour écorcer le tronc d'arbre, en réglant le rouleau d'alimentation (20) de façon à former un angle (ß) avec l'axe longitudinal du tronc d'arbre.

2. Méthode selon la revendication 1, **caractérisée en ce que** le rouleau d'alimentation (20) est régie de façon à former un angle (ß) de 0° à 45° avec l'axe longitudinal du tronc d'arbre (11) pour choisir si le tronc d'arbre va avancer tout droit ou dans un mouvement de rotation.

3. Un appareil (30, 31) pour la récolte du bois se déplaçant sur le terrain et équipé d'une tête d'abattage (10) pour le traitement des arbres à couper, cette tête d'abattage comprenant
- des moyens de préhension pour saisir le tronc (11) de l'arbre à abattre,
- un dispositif de coupe pour couper le tronc (11) de l'arbre à abattre,
- au moins un rouleau d'alimentation (20) pour l'amener en contact avec le tronc d'arbre coupé (11) et pour déplacer le tronc d'arbre coupé à travers la tête d'abattage (10),
- au moins un dispositif d'ébranchage (12) pour ébrancher le tronc d'arbre coupé (11), et
- un dispositif de coupe pour couper le tronc d'arbre ébranché en billes de longueur appropriée,
**caractérisé en ce**
- **que** la tête d'abattage (10) est équipée d'un élément de réglage pour régler le rouleau d'alimentation (20) alimentant le tronc d'arbre coupé (11) à travers la tête d'abattage (10) jusqu'à
- une première position où le rouleau d'alimentation (20) est orienté dans la direction de l'axe longitudinal du tronc d'arbre lorsque le tronc d'arbre n'est pas à écorcer, ou
- une seconde position où le rouleau d'alimentation (20) forme un angle (ß) avec l'axe longitudinal du tronc d'arbre lorsque le tronc d'arbre est à écorcer.

4. Appareil selon la revendication 3, **caractérisé en ce que** l'élément de réglage est équipé de façon à régler le rouleau d'alimentation (20) dans un angle (ß) de 0° à 45° avec l'axe longitudinal du tronc d'arbre (11) pour choisir si le tronc d'arbre va avancer tout droit ou dans un mouvement de rotation.
